# EUROPÄISCHE PATENTSCHRIFT

(11) **EP 1 498 059 B1**
(45) Veröffentlichungstag und Bekanntmachung des Hinweises auf die Patenterteilung: **25.06.2008**
(21) Anmeldenummer: 04016548.2
(22) Anmeldetag: 14.07.2004
(51) Int. Cl.: A47J 31/06

(54) **Kaffeebrühvorrichtung mit Bläschenformer**
Coffee brewer with device for forming bubbles
Machine à café avec dispositif de formation de bulles

(30) Priorität: 15.07.2003 DE 10332051
(43) Veröffentlichungstag der Anmeldung: 19.01.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 0 878 158
- EP-A- 1 125 535
- WO-A-97/39668
- WO-A-02/100224
- DE-A- 10 247 573
- DE-U- 9 403 615
- US-A- 5 824 218

## Beschreibung

Die vorliegende Erfindung betrifft eine Kaffeebrühvorrichtung mit einem Filterhalter, einem im Filterhalter angeordneten Kaffeefilter, mindestens einer stromabwärts vom Kaffeefilter angeordneten Düsenöffnung zum Erzeugen eines Flüssigkeitsstrahls und einem Bläschenformer zum Erzeugen eines feinporigen Flüssigkeitsschaums, auf den der Flüssigkeitsstrahl gerichtet ist.

Eine solche Vorrichtung ist z.B. aus der EP 0878158 B1 bekannt. Bei dieser Kaffeebrühvorrichtung wird heißes Wasser über ein Steigrohr in einen Filterhalter geleitet und durchdringt dort einen napfförmig ausgestalteten mit gemahlenem Kaffee gefüllten Kaffeefilter. Anschließend wird der Kaffeeextrakt über eine Zuführleitung einem Einlass zugeführt und dort mittels zweier Düsenöffnungen zwei Flüssigkeitsstrahlen erzeugt. Die Flüssigkeitsstrahlen strömen in einen Reservoirtopf ein, der so gestaltet ist, dass die Flüssigkeit nur langsamer abfließen kann als zulaufen. Hierdurch sammelt sich in dem Reservoirtopf eine Flüssigkeitsmenge an und die beiden Flüssigkeitsstrahlen werden in die sich ansammelnde Flüssigkeit eingespritzt. Hierdurch wird ein feinporiger Schaum erzeugt, der dann zusammen mit dem restlichen Kaffeeextrakt über die eigentlichen Ausflussöffnungen abfließen kann.

Es sind ein Reihe weiterer Kaffeebrühvorrichtungen bekannt, die unterhalb des Filterhalters für eine Luftzuführung sorgen, um so eine Aufschäumung zu erreichen. Beispielhaft seien hier die DE 10247573 A1 und die EP 1125535 A2 genannt.

Zum Teil funktionieren bekannte Bläschenformer nur bei Espressomaschinen, die mit einem Betriebsdruck von mindestens 6 bar arbeiten. Zwar weisen einige der Niederdruckgeräte, wie die EP 0878158 B1, bereits gute Ergebnisse auf. Jedoch besteht auch hier das Bestreben, noch feinporigeren Kaffeeschaum zu erzeugen und die Anzahl der Mikroschaumbläschen pro Kaffeeextraktmenge zu erhöhen.

Es ist daher die Aufgabe der vorliegenden Erfindung, eine Kaffeebrühvorrichtung der eingangs genannten Art bereitzustellen, die eine verbesserte Schaumbildung ermöglicht.

Diese Aufgabe wird erfindungsgemäß dadurch gelöst, dass der Bläschenformer einen Strahlteiler mit mehreren Durchtrittsöffnungen umfasst, der quer im Strömungsweg des Flüssigkeitsstrahls angeordnet ist, wobei der Strahlteiler von einem Kunststoffoder Edelstahlgewebe gebildet ist und im Wesentlichen der gesamte Flüssigkeitsstrahl auf den Strahlteiler trifft. Die Ausbildung des Flüssigkeitsstrahls ist dabei besonders wichtig. Dieser muss umgeben von Luft oder Dampf auf den Strahlteiler auftreffen, so dass aufgrund der kinetischen Energie vermutete Strukturänderungen in der Kaffeeflüssigkeit einsetzen, die ein Aufschäumen begünstigen. Versuche haben gezeigt, dass eine reichhaltige Schaumbildung möglich wird. Der so erzeugte Bläschenformer zeigt sowohl bei niedrigen als auch bei höheren Betriebsdrücken sehr gute Ergebnisse. Hierbei können auch mehrere Einzelflüssigkeitsstrahlen verwendet werden, die bevorzugt im Abstand zueinander auf den Strahlteiler auftreffen. Allerdings muss der Gesamtvolumenstrom so gewählt sein, dass sich bei vorhandenem Betriebsdruck die gewünschte Strahlwirkung einstellt. Hierbei ist der Strahlteiler durch ein Kunststoff- oder Edelstahlgewebe ausgebildet, obwohl auch ein sehr feinporiges Metallblech verwendet werden kann. Kunststoff- oder Edelstahlgewebe können in beliebigen Feinheitsgraden hergestellt werden, so dass dem Flüssigkeitsstrahl im Bereich des Auftrefforts eine große Aufschäumoberfläche bereitgestellt werden kann. Darüber hinaus sind solche Kunststoff- oder Edelstahlgewebe preiswert in der Herstellung und können bei der Herstellung in einfacher Weise mit einem Halter verbunden, insbesondere verschweißt, werden. Bei der Verwendung eines feinporigen Metallblechs kann der Strahlteiler aus einer ätz- oder galvanotechnisch hergestellten Gitterstruktur gebildet sein, z.B. geätzte Metallbleche- bzw. -folien. Durch diese Herstellverfahren können feine und feinste Durchtrittsöffnungen auch in verschiedenen Querschnittsformen erzeugt werden.

Zu unterscheiden ist die vorliegende Erfindung von Maßnahmen, die zwar Lochplatten im Strömungsweg des Kaffeeextrakts verwenden, z.B. WO 97/39668 und US 5824218. Jedoch nicht die Ausbildung eines feinen, bevorzugt durch eine Düse erzeugten Flüssigkeitsstrahls aufweisen, der für das gewünschte Resultat unerlässlich ist. Während bei der WO 97/39668 der Kaffeeextrakt aus dem Filter einfach abtropft, füllt sich der enge Zwischenraum zwischen den beiden Filterplatten bei der US 5824218 so mit Kaffeeextrakt, dass kein freier Flüssigkeitsstrahl ausgebildet werden kann. Hier werden andere Mechanismen des Aufschäumens, mit zum Teil mäßigem Erfolg, eingesetzt.

Um eine reichhaltige Schaumbildung für den gesamten Flüssigkeitsstrahl zu ermöglichen, kann der strömungsoffene Querschnitt des Strahlteilers 80 bis 320 mm², bevorzugt 150 bis 250 mm², insbesondere 175 bis 225 mm², betragen.

Eine bevorzugte Ausführungsform der Erfindung sieht vor, dass der Bläschenformer einen zweiten Strahlteiler umfasst, der aus einem Kunststoff- oder Edelstahlgewebe gebildet ist und im Abstand zum ersten Strahlteiler angeordnet ist. Ein solcher Bläschenformer ermöglicht eine besonders reichhaltige Schaumbildung mit einer besonders feinporigen Struktur, die eine längere Standzeit des Schaums nach Abschluss des Brühvorgangs auf der Kaffeeflüssigkeit ermöglicht.

Vorteilhafterweise kann der Abstand des ersten Strahlteilers zum zweiten Strahlteiler 1 bis 5 mm, bevorzugt 2 bis 4 mm, insbesondere ca. 3 mm, betragen. Die Einstellung des Abstands zwischen dem ersten und zweiten Strahlteiler ermöglicht eine, die Konstruktion der Kaffeebrühvorrichtung berücksichtigende Einstellung der Schaummenge und der Porengröße.

In einer vorteilhaften Ausgestaltung kann der Bläschenformer eine Schäumungskammer umfassen, die vom ersten und zweiten Strahlteiler begrenzt ist. Die Schäumungskammer ermöglicht eine besonders feinporige Schaumbildung. Größere Schaumblasen werden durch den zweiten Strahlteiler in der Schäumungskammer zurückgehalten bis sie durch die Durchmischung mit nachströmender Kaffeeflüssigkeit oder eine entsprechende Verweilzeit in der Schäumungskammer zu einem feinporigen Schaum umgewandelt sind.

Für eine schnelle Umwandlung großporiger Bläschen und eine reichhaltige Schaumbildung kann das Volumen der Schäumungskammer 400 bis 800 mm³, bevorzugt 500 bis 700 mm³, insbesondere 550 bis 650 mm³, betragen.

In einer Ausführungsform ist vorgesehen, dass der Strahlteiler einen Lochdurchmesser und/oder eine Maschenweite von 100 bis 180 µm, bevorzugt 130 bis 150 µm, aufweist. Durch die Öffnungsränder der Öffnungen, entstehen entsprechend viele Verwirbelungskanten, die für die gewünschte Aufschäumwirkung des Bläschenformers verantwortlich sind.

Versuche haben gezeigt, dass günstigerweise ein Kunststoff- oder Edelstahlgewebe mit einer Fadenstärke von 80 bis 140 µm, bevorzugt 100 bis 120 µm, eingesetzt werden kann. Durch derartige dünne Kunststoff- oder Edelstahlfäden entstehen geeignete Strömungshindernisse, die den Flüssigkeitsstrahl regelrecht zerteilen können und so voraussichtlich eine Wirkung auf die innere Struktur der Kaffeeflüssigkeit haben und eine gute Vermischung mit Luft ermöglichen.

Wichtig ist bei der vorliegenden Vorrichtung, dass der Flüssigkeitsstrahl mit ausreichender kinetischer Energie auf den Strahlteiler auftreffen kann, wobei dieser bevorzugt von Luft und Dampf umgeben ist, also günstigerweise eine freie Strömungsstrecke aufweist. Versuche haben gezeigt, dass günstigerweise der Abstand zwischen einem unteren Ende der Düsenöffnung und dem Strahlteiler 10 bis 35 mm, bevorzugt 15 bis 30 mm, betragen kann. Dieser freie Strömungsweg des Flüssigkeitsstrahls stellt sicher, dass beim Auftreffen des Strahls auf den Strahlteiler genügend Luft (insbesondere warme Luft) oder Dampf aus der Umgebung bei der Schaumausbildung beteiligt ist.

Hierbei kann der Querschnitt der Düsenöffnung 0,3 bis 0,7 mm², bevorzugt 0,38 bis 0,50 mm², betragen. Es soll demnach ein sehr feiner dünner Flüssigkeitsstrahl erzeugt werden, der auch bei Niederdruckbrühvorrichtungen mit der gewünschten kinetischen Energie auf den Strahlteiler auftrifft.

Eine günstige Ausführungsform sieht vor, dass das Verhältnis zwischen dem Abstand vom unteren Ende der Düsenöffnung und dem ersten Strahlteiler sowie dem Durchmesser der Düsenöffnung 15 bis 40, bevorzugt 20 bis 35, beträgt. Dieses Verhältnis zwischen dem Durchmesser der Düsenöffnung und dem freien Strömungsweg des Flüssigkeitsstrahls stellt sicher, dass genügend Luft oder Dampf aus der Umgebung für eine reichhaltige Schaumbildung beim Auftreffen auf den ersten Strahlteiler mitgerissen wird, unabhängig vom Querschnitt der Düsenöffnung.

Um eine reichhaltige Schaumbildung mit einer feinporigen Struktur zu ermöglichen, kann weiter das Verhältnis zwischen dem Abstand des ersten Strahlteilers zum zweiten Strahlteiler und dem Durchmesser der Düsenöffnung 2,5 bis 5, bevorzugt 3,5 bis 4, betragen.

Des Weiteren kann eine stromaufwärts vom Kaffeefilter zuführende Flüssigkeitszuführeinrichtung vorgesehen sein, wobei die Förderleistung der Flüssigkeitszuführeinrichtung und der Strömungsquerschnitt der Düsenöffnung derart aufeinander abgestimmt sind, dass ein Brühdruck von 1,0 bis 2,0 bar, bevorzugt 1,5 bis 1.8 bar, eingestellt ist. Der Bläschenformer eignet sich insbesondere für Niederdruckkaffeebrühvorrichtungen, bei denen naturgemäß bei einem herkömmlichen Brühvorgang nur mit einer geringen Schaumbildung gerechnet werden kann. Die vorliegende Erfindung stellt aber auch bei diesen Niederdruckbrühvorrichtungen eine Schaumintensität und - feinheit bereit, wie sie üblicherweise nur von Hochdruckgeräten bekannt sind.

Als weiterer Vorteil hat sich gemäß einer Variante herausgestellt, wenn unterhalb des Bläschenformers ein sich in Strömungsrichtung erweiternder Verteilerkegel angeordnet ist. Günstigerweise befindet sich dieser mit seiner Spitze direkt unter dem Strahlzentrum. Hierdurch trifft der durch den Strahlteiler aufgeschäumte Flüssigkeitsstrom auf die Spitze des Kegels auf und verteilt sich nach allen Richtungen und fließt an der Mantelfläche des Kegels nach allen Richtungen ab. Durch das sanfte Auftreffen auf die geneigte Mantelfläche des Kegels und das Abgleiten auf dessen Oberfläche, wird die Schaumbildung stabilisiert. Des Weiteren wird die Flüssigkeit gleichmäßig auch mehreren Auslauföffnungen zugeführt.

Günstigerweise kann oberhalb des und konzentrisch um den Strahlteiler eine umlaufende Spritzschutzwand angeordnet sein. Ein Teil der auftreffenden Flüssigkeit spritzt zurück oder seitlich weg, so dass hierdurch eine Maßnahme ergriffen ist, die Flüssigkeit möglichst dem Strömungsweg wieder zuzuführen.

Damit die Möglichkeit besteht, den Bläschenformer auszutauschen oder zu reinigen, kann der Strahlteiler in einem lösbar angebrachten Träger angeordnet sein.

Gemäß einer weiteren Ausführungsform ist der Bläschenformer und der Träger von einer Auslaufkappe mit mindestens einer Auslauföffnung umgeben, wobei die Auslaufkappe und der Träger über eine Steckverbindereinrichtung lösbar miteinander verbunden sind. Die Auslaufkappe ist in aller Regel leicht zugänglich und somit kann auch der Träger und der Bläschenformer aus dieser leicht entfernt und gereinigt oder ausgetauscht bzw. wieder eingesetzt werden.

Günstigerweise kann die Steckverbindereinrichtung Durchflusskanäle zum Abfließen der Flüssigkeit unterhalb des Bläschenformers aufweisen. Die Steckverbindereinrichtung kann sich daher im unmittelbaren Strömungsweg befinden; behindert aber das Abfließen der Kaffeeflüssigkeit nicht.

Der Bläschenformer kann insbesondere in Verbindung mit Kaffeefiltern eingesetzt werden, die durch ein aus Filterpapier geformtes, mit gemahlenem Kaffee gefülltes Filterpad gebildet sind. Diese portionierten Kaffeepulvereinheiten sorgen dafür, dass die gesamte Kaffeebrühvorrichtung nicht in direkter Berührung mit dem Kaffeepulver kommt und es so nicht zum Zusetzen von Öffnungen, z.B. der Düsenöffnung oder der Öffnungen des Strahlteilers, kommt. Der Bläschenformer ist daher in Verbindung mit solchen Portionskaffeefiltern betriebssicher.

Die vorliegende Erfindung bezieht sich weiter auf ein Verfahren zum Herstellen eines Bläschenformers zum Erzeugen eines feinporigen Flüssigkeitsschaums, der quer im Strömungsweg eines Flüssigkeitsstrahls einer Kaffeebrühvorrichtung angeordnet wird, mit den folgenden Schritten:
- Bereitstellen eines Trägers mit einer Durchtrittsöffnung für den Flüssigkeitsstrahl,
- Anordnen und Befestigen, bevorzugt Verschweißen, eines ersten Strahlteilers aus einem Kunststoff- oder Edelstahlgewebe auf einem die Durchtrittsöffnung umgebenden, sich im Wesentlichen senkrecht zum Flüssigkeitsstrahl erstreckenden ersten Absatz im Träger,
- Anordnen und Befestigen, bevorzugt Verschweißen, eines zweiten Strahlteilers aus einem Kunststoff- oder Edelstahlgewebe auf einem die Durchtrittsöffnung umgebenden, sich im Wesentlichen senkrecht zum Flüssigkeitsstrahl erstreckenden zweiten Absatz im Träger, wobei der zweite Strahlteiler in einem Abstand zum ersten Strahlteiler angeordnet wird.

Dieses Verfahren ermöglicht die Herstellung eines Bläschenformers, der sowohl bei niedrigen als auch hohen Betriebsdrücken in einer Kaffeebrühvorrichtung eine reichhaltige Schaumbildung ermöglicht.

Um eine einfache Herstellung des Bläschenformers mit einer möglichst geringen Anzahl an Einzelkomponenten zu realisieren, kann im Träger ein ringförmiger, die Durchtrittsöffnung umgebender Abschnitt vorgesehen sein, dessen obere, dem Flüssigkeitsstrahl zugewandte Stirnseite den ersten Absatz bildet und dessen untere in Strömungsrichtung liegende Stirnseite den zweiten Absatz bildet, wobei der erste Strahlverteiler von oben auf dem ersten Absatz angeordnet wird und der zweite Strahlverteiler von unten auf dem zweiten Absatz angeordnet wird.

Die Erfindung bezieht sich auch auf eine Kaffeebrüheinheit mit einer Düsenöffnung zum Erzeugen eines Flüssigkeitsstrahls und einem Bläschenformer zum Erzeugen eines feinporigen Flüssigkeitsschaums, auf die der Flüssigkeitsstrahl gerichtet ist. Des Weiteren umfasst der Bläschenformer einen Strahlteiler mit mehreren Durchtrittsöffnungen, der quer im Strömungsweg des Flüssigkeitsstrahls angeordnet ist. Günstigerweise sind dabei die Lochdurchmesser und/oder Maschenweiten des Strahlteilers so gewählt, dass sie kleiner sind als der Durchmesser des Flüssigkeitsstrahls. Das Verhältnis vom Durchmesser der Düsenöffnung zum Lochdurchmesser und/oder der Maschenweite des Strahlteilers beträgt mindestens 5, bevorzugt mindestens 9.

Des Weiteren bezieht sich die Erfindung auf ein Verfahren zum Herstellen einer warmen Kaffeeflüssigkeit mit einem feinporigen Schaum mit folgenden Schritten:
Bereitstellen von warmem bzw. heißem Wasser,
Hindurchleiten von warmem bzw. heißem Wasser durch einen mit gemahlenem Kaffee gefüllten Kaffeefilter,
Erzeugen eines Flüssigkeitsstrahls aus Kaffeeflüssigkeit und Aufspritzen des Flüssigkeitsstrahls auf einen Strahlteiler mit mehreren Durchtrittsöffnungen zum zumindest teilweise Erzeugen eines feinporigen Schaums.

Das Verfahren weist die bereits oben im Zusammenhang mit der Vorrichtung beschriebenen Vorteile auf.

Günstigerweise kann das Verfahren so durchgeführt werden, dass das Hindurchleiten des warmen bzw. heißen Wassers durch den mit gemahlenem Kaffee gefüllten Kaffeefilter und das Erzeugen des Flüssigkeitsstrahls bei einem Brühdruck von 1,0 bis 2,0 bar, bevorzugt 1,5 bis 1,8 bar, erfolgen. Das erfindungsgemäße Verfahren eignet sich insbesondere bei Kaffeebrüheinheiten, die im Niederdruckbereich arbeiten und dennoch ein gutes Schäumergebnis liefern sollen.

Im Folgenden wird ein Ausführungsbeispiel der vorliegenden Erfindung anhand einer Zeichnung näher erläutert. Es zeigen:
- Fig. 1: einen vergrößerten Ausschnitt einer erfindungsgemäßen Kaffeebrühvorrichtung im Vollschnitt,
- Fig. 2: die Auslaufkappe mit Bläschenformer aus Fig. 1 in einer perspektivischen Schnittdarstellung, und
- Fig. 3: einen vergrößerten Ausschnitt einer weiteren Ausführungsform einer erfindungsgemäßen Kaffeebrühvorrichtung im Vollschnitt.

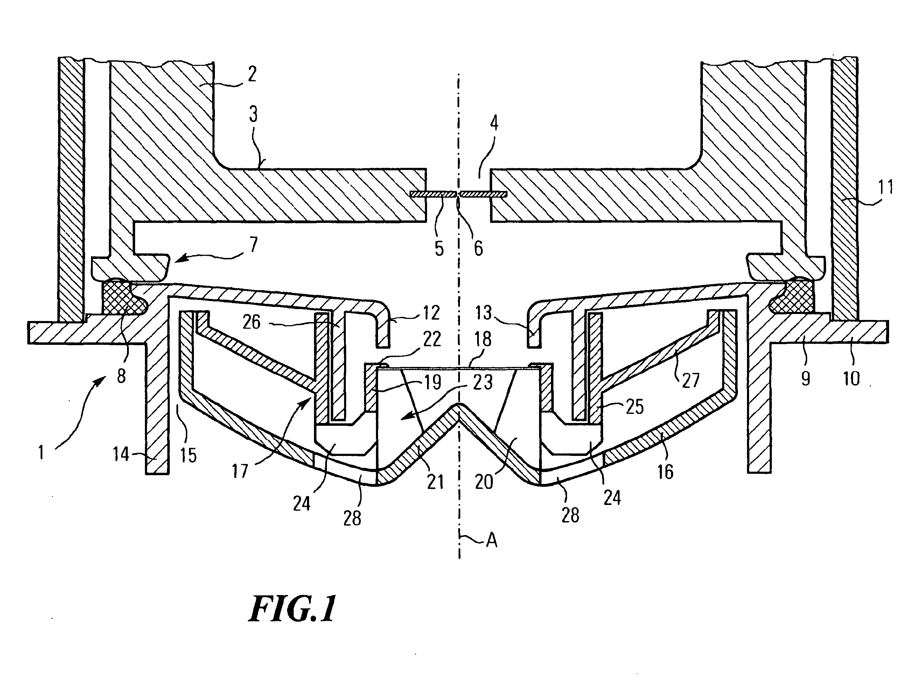

In Fig. 1 ist der untere Teil des Brühkopfes 1 einer Kaffeemaschine dargestellt. Die Kaffeemaschine verfügt über ansonsten im Stand der Technik bestens bekannte Merkmale, wie Wasserbehälter, Durchlauferhitzer oder Boiler, Heißwasserzuführung etc. Der dargestellte Brühkopf 1 dient zur Verwendung von sogenannten Filterpads. Filterpads sind kissenförmige, am Rand miteinander verschweißte oder verklebte Filtervliese bzw. Filterpapiere, in die eine Portionsmenge gemahlener Kaffee eingefüllt ist. Zur Aufnahme eines solchen Filterpads weist der Brühkopf 1 einen Filterhalter 2 mit einer Aufnahmevertiefung 3 auf. In die Aufnahmevertiefung 3 wird das Filterpad eingelegt. Im Zentrum weist der Filterhalter 2 eine Auslassöffnung 4 auf, in der eine Düsenplatte 5 angeordnet ist. Die Düsenplatte besteht bevorzugt aus Metall (insbesondere Edelstahl) und ist mit einer Düsenöffnung 6 versehen, die im vorliegenden Beispiel einen Durchmesser von 0,8 mm und somit eine Querschnittsfläche von ungefähr 0,5 mm² aufweist.

Der Filterhalter 2 weist an seinem Außenumfang einen nach unten vorstehenden, umlaufenden Dichtring 7 auf, der sich bevorzugt auf einer elastischen Ringdichtung 8 abstützt. Die Ringdichtung 8 sitzt auf einem Druckring 9 auf, der bevorzugt aus Aluminiumdruckguss hergestellt ist und zum Auffangen der im Betrieb im Brühkopf 1 wirkenden Druckkräfte dient. Der Druckring 9 ist in nicht näher gezeigter Weise fest am Gehäuse der Kaffeemaschine verankert. Auf einem außen vorstehenden Flansch 10 des Druckrings 9 sitzt ein umlaufender Wandbestandteil 11 des Gehäuses vom Brühkopf 1 auf. Die Oberseite des Druckrings 9 ist leicht trichterförmig ausgestaltet und weist in der Mitte eine Durchgangsöffnung 12 auf, deren Durchmesser größer ist als der Durchmesser der Auslassöffnung 4 des Filterhalters 2. Die Durchgangsöffnung 12 weist einen nach unten vorstehenden Kragen 13 auf.

Des Weiteren ist am Druckring 9 ein nach unten vorstehender Schutzring 14 vorgesehen, der eine Aufnahme 15 umgibt, in der eine höhenverstellbare Auslaufkappe 16 angeordnet ist. Obwohl nicht näher dargestellt, lässt sich die Auslaufkappe 16 bevorzugt durch Drehen um ihre Achse A in der Höhe verstellen.

Zwischen der Unterseite des Druckrings 9 und der Innenseite der Auslaufkappe 16 ist ein Bläschenformer in Form eines Trägers 17 mit einem quer zur Strömungsrichtung eines durch die Düsenplatte 5 erzeugten Flüssigkeitsstrahles angeordneten feinmaschigen Strahlteilers 18 eingesetzt.

Der feinmaschige Strahlteiler 18 wird von einem Kunststoff- oder Edelstahlgewebe gebildet, das bevorzugt eine Fadenstärke von 50 µm und eine Maschenweite von 80 µm aufweist. Aufgrund der Tatsache, dass der Träger 17 aus Kunststoff besteht, kann der feinmaschige Strahlteiler 18 mit diesem verschweißt sein. Allerdings kann auch eine lösbare Trennverbindung vorgesehen sein. Der wirksame Durchmesser des feinmaschigen Strahlteilers 18 entspricht im Wesentlichen dem Durchmesser der Durchgangsöffnung 12.

Der Träger 17 umfasst einen Steckring 19, mit dem dieser mit der Auslaufkappe 16 verbunden ist. Hierzu sind auf der Innenseite der Auslaufkappe 16 mehrere nach oben vorstehende Steckrippen 20 vorgesehen. Die Steckrippen 20 sind auf einem sich nach oben hin verjüngenden Verteilerkegel 21 angeordnet und überragen dessen Spitze. Die Steckrippen 20 repräsentieren gemeinsam einen Steckzapfen, auf den der Steckring 19 mit Klemmwirkung aufsteckbar ist. Der an der oberen Kante des Steckrings 19 umlaufende Anschlagflansch 22 dient als Aufsteckbegrenzung und kommt den Oberkanten der Steckrippen 20 zur Anlage. Zwischen den Steckrippen 20 sind Durchflusskanäle 23 vorhanden, so dass ein Abfließen über die Oberfläche des Verteilerkegels 21 ermöglicht ist. Im vorliegenden Ausführungsbeispiel sind sechs Steckrippen 20 vorgesehen. Der Steckring 19 ist an seinem unteren Ende über radial abstehende Speichenstege 24 (hier: 8 Stück) mit einem nach oben vorstehenden und koaxial zum Steckring 19 angeordneten Spritzschutzring 25 verbunden. In diesen Spritzschutzring 25 greift ein sich von der Unterseite des Druckrings 9 nach unten erstreckender Spritzschutzring 26 koaxial ein. Der Spritzschutzring 26 ist einteilig mit dem Druckring 9 ausgestaltet. Die teleskopartig ineinander greifenden Spritzschutzringe 25 und 26 gewährleisten, dass auch bei Höhenverstellung der Auslaufkappe 16 immer ein ausreichender Spritzschutz gewährt ist.

Am Außenumfang des Spritzschutzrings 25 ist ein konisch ausgebildeter Abtropfring 27 angeordnet, an dessen kegelförmiger Unterseite Kondenswasser zur Mitte zurückgeführt wird. Direkt im Anschluss an den Verteilerkegel 21 sind die Auslauföffnungen 28 angeordnet, damit die Kaffeeflüssigkeit mit dem feinporigen Schaum staufrei von dem Verteilerkegel 21 direkt ablaufen kann.

Im Folgenden wird die Wirkungs- und Funktionsweise des oben beschriebenen Brühkopfs 1 näher erläutert.

Vor der Inbetriebnahme wird Wasser in einen nicht dargestellten Wasserbehälter eingefüllt und über eine Boilereinrichtung erhitzt. Vor dem Brühen wird ein Filterpad in den Filterhalter 2 eingelegt, so dass sich oberhalb der Auslassöffnung 4 und im Abstand zur Düsenplatte 5, die bevorzugt eine Dicke von 0,3 bis 0,5 mm aufweist, das Filterpad befindet. Anschließend wird der Brühkopf 1 geschlossen und eine Portion heißes Wasser auf das Filterpad geleitet. Das heiße Wasser durchdringt das Filterpad und strömt an dessen Unterseite ab und in die Auslassöffnung 4 ein. Aufgrund der Größe der Düsenöffnung 6 und der Förderleistung einer Wasserzuführeinrichtung, insbesondere Pumpe, stellt sich ein Brühdruck von ca. 1,5 bis 1,8 bar ein. Je nachdem in welcher Stellung sich die Auslasskappe 16 befindet, ist zwischen der Düsenplatte 5 und dem feinmaschigen Strahlteiler 18 ein freier Strömungsweg von mindestens 10 mm vorhanden. In diesem Zusammenhang könnte man auch von der freien Strahlstrecke des Flüssigkeitsstrahls reden. Durch den sich einstellenden Brühdruck wird mit Hilfe der Düsenplatte 5 ein feiner dünner Kaffeeflüssigkeitsstrahl erzeugt.

Dieser Strahl trifft mit seiner kinetischen Energie auf dem feinmaschigen Strahlteiler 18 auf und lässt hier einen relativ feinporigen Schaum entstehen. Durch den feinmaschigen Strahlteiler 18 wird vermutlich einerseits die Struktur der Kaffeebestandteile verändert und andererseits erwärmte Luft aus dem Auslaufbereich zugemischt, so dass der relativ feinporige Schaum erzeugt werden kann. Die Spritzschutzringe 25 und 26 sorgen dafür, dass seitlich wegspritzende Kaffeeflüssigkeit ablaufen und den Auslauföffnungen 28 zugeführt wird. Durch den feinmaschigen Strahlteiler 18 hindurchtretende Kaffeeflüssigkeit einschließlich des feinporigen Schaums trifft auf den Verteilerkegel 21 auf und durch diesen nach allen Seiten durch die Durchflusskanäle 23 zwischen den Steckrippen 20 hindurch zu den Auslauföffnungen 28 geleitet. Die Form des Verteilerkegels 21 ermöglicht ein sanftes Auftreffen der aus dem Bläschenformer austretenden Kaffeeflüssigkeit einschließlich des feinporigen Schaums und ein ungehindertes schnelles Abführen zu den Auslauföffnungen 28, wodurch eine Rückbildung oder Verflüchtigung des Schaums sowie das Platzen der Schaumbläschen an Prallflächen verhindert wird. Auch die Speichenstege 24 sorgen dafür, dass der Ausfluss durch die Auslauföffnungen 28 möglichst nicht beeinträchtigt wird.

Bei diesem Vorgang steigt seitlich Kondensat auf, das sich auf der Unterseite des Abtropfrings 27 niederschlägt und durch dessen Kegelform wieder zum Innern hin zurückläuft und entlang des Spritzschutzrings 25 dann nach unten in die Auslassöffnung 28 abtropft.

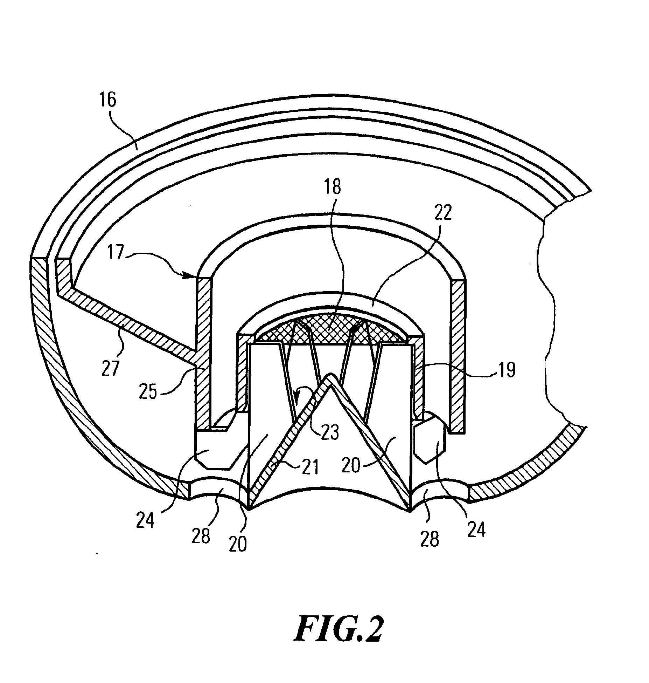

Fig. 2 zeigt eine weitere Ausführungsform einer erfindungsgemäßen Kaffeebrühvorrichtung, wobei im Folgenden nur die Unterschiede gegenüber der oben beschriebenen Ausführungsform näher erläutert werden. Auch hier ist zwischen der Unterseite des Druckrings 9 und der Innenseite der Auslaufkappe 16 ein Bläschenformer angeordnet, der jedoch in Form einer Schäumungskammer 29 ausgebildet ist. Die Schäumungskammer 29 wird aus einem ersten feinmaschigen Strahlteiler 18a und einem zweiten feinmaschigen Strahlteiler 18b, die scheibenförmig ausgestaltet sind und quer zur Strömungsrichtung eines durch die Düsenplatte 5 erzeugten Flüssigkeitsstrahles angeordnet sind, sowie dem umlaufenden Anlageflansch 22 des Steckrings 19 gebildet. Die feinmaschigen Strahlteiler 18a, 18b sind aus einem Kunststoff- oder Edelstahlgewebe geformt, das bevorzugt eine Fadenstärke von 112 µm und eine Maschenweite von 140 µm aufweist. Zur Ausbildung der Schäumungskammer 29 ist der erste feinmaschige Strahlteiler 18a auf dem umlaufenden Anschlagflansch 22 aus der Richtung des Flüssigkeitsstrahles angeordnet. Da der am Steckring 19 ausgebildet umlaufende Anschlagflansch 22 als Teil des Trägers 17 aus Kunststoff besteht, kann der feinmaschige Strahlteiler 18a mit diesem verschweißt sein. Allerdings kann auch hier eine lösbare Verbindung vorgesehen sein. Der zweite feinmaschige Strahlteiler 18b wird aus der entgegengesetzten Richtung, d.h. von unten, auf den umlaufenden Anschlagflansch 22 aufgesetzt und gegebenenfalls mit diesem verschweißt. Das Verschweißen der feinmaschigen Strahlteiler 18a, 18b mit dem umlaufenden Anschlagflansch 22 kann in einfacher Weise mittels eines Heißstempels erfolgen. Die Dicke des Anschlagflansches 22 bestimmt den Abstand des ersten Strahlteilers 18 zum zweiten Strahlteiler 18a, wobei zur Ausbildung eines feinporigen Schaums ein Abstand von ca. 3 mm bevorzugt ist. Weiter bestimmt die Dicke des umlaufenden Anschlagflansches 22 zusammen mit dem lichten Durchmesser des Anschlagflansches 22 das Volumen der Schäumungskammer 29. Die beiden scheibenförmigen Strahlteiler 18a, 18b sind im Träger 17 um ihre Mittelachse verdreht angeordnet, so dass eine gleiche Ausrichtung der feinmaschigen Struktur vermieden wird. Dadurch verlaufen die Fäden der Kunststoff- oder Edelstahlgewebe nicht parallel zueinander, sondern in einem Winkel versetzt zueinander, bevorzugt mit einem Winkel zwischen 20° und 70°.

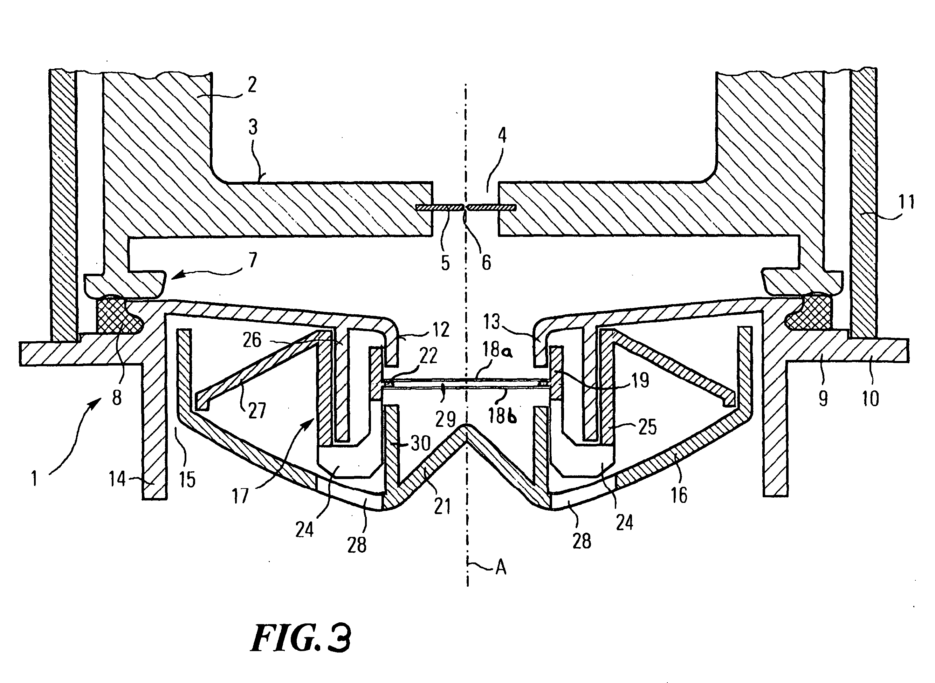

In der in Fig. 3 gezeigten Ausführungsform erstreckt sich die obere Kante des Steckrings 19 bis über den nach unten vorstehenden Kragen 13 der Durchgangsöffnung 12, so dass die obere Kante des Steckrings 19 den nach unten vorstehenden Kragen 13 teleskopartig umgibt. Um einen Flüssigkeitsstau oberhalb des ersten feinmaschigen Strahlteilers 18a zwischen der oberen Kante des Steckrings 19 zu vermeiden, ist die obere Kante des Steckrings 19 mit mindestens einem Schlitz (nicht gezeigt) versehen, der sich bis zum umlaufenden Anschlagflansch 22 erstreckt.

Die Auslaufkappe 16 der Kaffeebrühvorrichtung aus Fig. 3 weist einen Positionierring 30 auf, der den sich nach oben hin verjüngenden Verteilerkegel 21 umgibt und dessen Spitze überragt. Der Positionierring 30 ist zumindest mit einem Schlitz (nicht gezeigt) versehen, der sich bis zum Boden der Auslaufkappe 16 erstreckt und einen sicheren Ablauf, der durch die Schäumungskammer 29 hindurch tretenden Flüssigkeit und feinporigen Schaums über die Oberfläche des Verteilerkegels 21 ermöglicht. Die Oberkanten des Positionierrings 30 dienen als Anschlagbegrenzung für den Träger 17 und kommen mit dem auf der Unterseite des umlaufenden Anschlagflansches 22 angeordneten zweiten feinmaschigen Strahlverteiler 18b zur Anlage. Dabei wird der Träger 17 durch die am unteren Ende des Steckrings 19 überstehenden radial angeordneten Speichenstege 24 seitlich an dem Positionierring 30 geführt.

Die Ausbildung des Bläschenformers als Schäumungskammer 29 ermöglicht die Nutzung von grobmaschigen Kunststoff- oder Edelstahlgewebe als Strahlteiler 18a, 18b. Die dadurch ermöglichte hohe Fadenstärke von über 100 µm verringert die Gefahr von Beschädigungen, während die erhöhte Maschenweite die Gefahr der Verkalkung des Bläschenformers verringert. Die Schäumungskammer 29 ermöglicht die Bildung von feinporigem Schaum trotz der Verwendung von relativ weitmaschigen Kunststoffoder Edelstahlgewebe mit einer hohen Fadenstärke, die dadurch unempfindlich gegenüber mechanischen Einwirkungen und Betriebseinflüssen sind. Dabei trifft der durch die Düsenplatte 5 erzeugte Flüssigkeitsstrahl zunächst auf den ersten Strahlteiler 18a und tritt durch ihn hindurch in die Schäumungskammer 29 ein, wobei bedingt durch die relativ große Maschenweite zunächst ein relativ großporiger Schaum entsteht. Das sich in der Schäumungskammer 29 befindliche Gemisch aus Flüssigkeit und Schaum tritt durch den zweiten feinmaschigen Strahlteiler 18b, der ebenfalls eine grobe Maschenweite aufweist, aus der Schäumungskammer 29 aus, wobei bedingt durch die gegenüber dem von der Düsenplatte 5 erzeugten Flüssigkeitsstrahl reduzierten Durchströmungsgeschwindigkeit von dem zweiten Strahlteiler 18b nur Flüssigkeit und feinporiger Schaum hindurchgelassen wird, während großporiger Schaum länger in der Schäumungskammer 29 verbleibt und sich so durch die längere Verweilzeit und die weitere Vermischung mit in die Schäumungskammer 29 eintretender Flüssigkeit zu feinporigem Schaum wandelt.

Diese oben beschriebenen Bläschenformer sorgen für eine Kaffeeerzeugung mit feinporigem Schaum selbst bei Kaffeemaschinen mit niedrigem Betriebsdruck. Der Vollständigkeit halber sei angemerkt, dass die Verwendung eines Flüssigkeitsstrahls in Verbindung mit den hier beschriebenen Strahlteilervorrichtungen auch für das Aufschäumen anderer, insbesondere erwärmter, Trinkflüssigkeiten (z.B. Milch) geeignet ist.

## Patentansprüche

1. Kaffeebrühvorrichtung (1) mit einem Filterhalter (2), einem im Filterhalter (2) angeordneten Kaffeefilter, mindestens einer stromabwärts vom Kaffeefilter angeordneten Düsenöffnung zum Erzeugen eines Flüssigkeitsstrahls und eines Bläschenformers zum Erzeugen eines feinporigen Flüssigkeitsschaums, auf die der Flüssigkeitsstrahl gerichtet ist, **dadurch gekennzeichnet, dass** der Bläschenformer einen Strahlteiler (18) mit mehreren Durchtrittsöffnungen umfasst, der quer im Strömungsweg des Flüssigkeitsstrahls angeordnet ist, wobei der Strahlteiler (18) von einem Kunststoff- oder Edelstahlgewebe gebildet ist und im Wesentlichen der gesamte Flüssigkeitsstrahl auf den Strahlteiler(18) trifft.

2. Vorrichtung nach Anspruch 1, **dadurch gekennzeichnet, dass** der strömungsoffene Querschnitt des Strahlteilers (18) 80 bis 320 mm², bevorzugt 150 bis 250 mm², insbesondere 175 bis 225 mm² beträgt.

3. Vorrichtung nach Anspruch 1 oder 2, **dadurch gekennzeichnet, dass** der Bläschenformer einen zweiten Strahlteiler (18b) umfasst, der aus einem Kunststoff- oder Edelstahlgewebe gebildet ist und im Abstand zum ersten Strahlteiler (18a) angeordnet ist.

4. Vorrichtung nach Anspruch 3, **dadurch gekennzeichnet, dass** der Abstand des ersten Strahlteilers (18a) zum zweiten Strahlteiler (18b) 1 bis 5 mm, bevorzugt 2 bis 4 mm, insbesondere ca. 3 mm, beträgt.

5. Vorrichtung an Anspruch 3 oder 4, **dadurch gekennzeichnet, dass** der Bläschenformer eine Schäumungskammer (29) umfasst, die vom ersten und zweiten Strahlteiler (18a,18b) begrenzt ist.

6. Vorrichtung nach Anspruch 5, **dadurch gekennzeichnet, dass** das Volumen der Schäumungskammer (29) 400 bis 800 mm³, bevorzugt 500 bis 700 mm³, insbesondere 550 bis 650 mm³, beträgt.

7. Vorrichtung nach einem der vorangegangenen Ansprüche, **dadurch gekennzeichnet, dass** der Strahlteiler (18) einen Lochdurchmesser und/oder eine Maschenweite von 100 bis 180 µm, bevorzugt 130 bis 150 µm, aufweist.

8. Vorrichtung nach einem der vorangegangenen Ansprüche, **dadurch gekennzeichnet, dass** das Kunststoff- oder Edelstahlgewebe eine Fadenstärke von 80 bis 140 µm, bevorzugt 100 bis 120 µm, aufweist.

9. Vorrichtung nach einem der vorangegangenen Ansprüche, **dadurch gekennzeichnet, dass** der Abstand zwischen einem unteren Ende der Düsenöffnung (6) und dem ersten Strahlteiler (18a) 10 bis 35 mm, bevorzugt 15 bis 30 mm, beträgt.

10. Vorrichtung nach einem der vorangegangenen Ansprüche, **dadurch gekennzeichnet, dass** der Querschnitt der Düsenöffnung 0,3 bis 0,7 mm², bevorzugt 0,38 bis 0,50 mm², beträgt.

11. Vorrichtung nach einem der vorangegangenen Ansprüche, **dadurch gekennzeichnet, dass** das Verhältnis zwischen dem Abstand vom unteren Ende der Düsenöffnung (6) und dem ersten Strahlteiler (18a) sowie dem Durchmesser der Düsenöffnung (6) 15 bis 40, bevorzugt 20 bis 35, beträgt.

12. Vorrichtung nach einem der Ansprüche 3 bis 11, **dadurch gekennzeichnet, dass** das Verhältnis zwischen dem Abstand des ersten Strahlteilers (18a) zum zweiten Strahlteiler und dem Durchmesser der Düsenöffnung (6) 2,5 bis 5, bevorzugt 3,5 bis 4, beträgt.

13. Vorrichtung nach einem der vorangegangenen Ansprüche, **dadurch gekennzeichnet, dass** eine stromaufwärts vom Kaffeefilter zuführende Flüssigkeitszuführeinrichtung vorgesehen ist und die Förderleistung der Flüssigkeitszuführeinrichtung und der Strömungsquerschnitt der Düsenöffnung (6) derart aufeinander abgestimmt sind, dass ein Brühdruck von 1,0 bis 2,0 bar, bevorzugt 1,5 bis 1,8 bar, eingestellt ist.

14. Vorrichtung nach einem der vorangegangenen Ansprüche, **dadurch gekennzeichnet, dass** unterhalb des Bläschenformers ein sich in Strömungsrichtung erweiternder Verteilerkegel (21) angeordnet ist.

15. Vorrichtung nach einem der vorangegangenen Ansprüche, **dadurch gekennzeichnet, dass** oberhalb des und konzentrisch um den ersten Strahlteiler (18a) eine umlaufende Spritzschutzwand (25,26) angeordnet ist.

16. Vorrichtung nach einem der vorangegangenen Ansprüche, **dadurch gekennzeichnet, dass** der Bläschenformer in einem lösbar angebrachten Träger (17) angeordnet ist.

17. Vorrichtung nach Anspruch 16 **dadurch gekennzeichnet, dass** der Bläschenformer (18) und der Träger (17) von einer Auslaufkappe (16) mit mindestens einer Auslauföffnung (28) umgeben ist und die Auflaufkappe (16) und der Träger (17) über eine Steckverbindereinrichtung (19,20) lösbar miteinander verbunden sind.

18. Vorrichtung nach Anspruch 17, **dadurch gekennzeichnet, dass** die Steckverbindereinrichtung (19,20) Durchflusskanäle (23) zum Abfließen der Flüssigkeit unterhalb des Bläschenformers aufweist.

19. Vorrichtung nach einem der vorangegangenen Ansprüche, **dadurch gekennzeichnet, dass** der Kaffeefilter ein aus Filterpapier geformtes, mit gemahlenem Kaffee gefülltes Filterpad ist.

20. Verfahren zum Herstellen eines Bläschenformers zum Erzeugen eines feinporigen Flüssigkeitsschaums, der quer im Strömungsweg eines Flüssigkeitsstrahls einer Kaffeebrühvorrichtung (1) angeordnet wird, mit den folgenden Schritten:
- Bereitstellen eines Trägers (17) mit einer Durchtrittsöffnung für den Flüssigkeitsstrahl,
- Anordnen und Befestigen, bevorzugt Verschweißen, eines ersten Strahlteilers (18a) aus einem Kunststoff- oder Edelstahlgewebe auf einem die Durchtrittsöffnung umgebenden, sich im Wesentlichen senkrecht zum Flüssigkeitsstrahl erstreckenden ersten Absatz im Träger (17),
- Anordnen und Befestigen, bevorzugt Verschweißen, eines zweiten Strahlteilers (18b) aus einem Kunststoff- oder Edelstahlgewebe auf einem die Durchtrittsöffnung umgebenden, sich im Wesentlichen senkrecht zum Flüssigkeitsstrahl erstreckenden zweiten Absatz im Träger (17), wobei der zweite Strahlteiler in einem Abstand zum ersten Strahlteiler angeordnet wird.

21. Verfahren zum Herstellen eines Bläschenformers nach Anspruch 20, **dadurch gekennzeichnet, dass** im Träger (17) ein ringförmiger die Durchtrittsöffnung umgebender Abschnitt (22) vorgesehen ist, dessen obere, dem Flüssigkeitsstrahl zugewandte Stirnseite den ersten Absatz bildet und dessen untere in Strömungsrichtung liegende Stirnseite den zweiten Absatz bildet, wobei der erste Strahlverteiler von oben auf dem ersten Absatz angeordnet wird und der zweite Strahlteiler von unten auf dem zweiten Absatz angeordnet wird.

22. Kaffeebrüheinheit mit mindestens einer Düsenöffnung zum Erzeugen eines Flüssigkeitsstrahls und eines Bläschenformers zum Erzeugen eines feinporigen Flüssigkeitsschaums, auf die der Flüssigkeitsstrahl gerichtet ist, **dadurch gekennzeichnet, dass** der Bläschenformer einen Strahlteiler (18) mit mehreren Durchtrittsöffnungen umfasst, der quer im Strömungsweg des Flüssigkeitsstrahls angeordnet ist, wobei der Strahlteiler (18) von einem Kunststoff- oder Edelstahlgewebe gebildet ist und im Wesentlichen der gesamte Flüssigkeitsstrahl auf den Strahlteiler trifft.

23. Verfahren zum Herstellen einer warmen Kaffeeflüssigkeit mit einem feinporigen Schaum mit folgenden Schritten:
- Bereitstellen von warmem bzw. heißem Wasser,
- Hindurchleiten von warmem bzw. heißem Wasser durch einen mit gemahlenem Kaffee gefüllten Kaffeefilter,
- Erzeugen eines Flüssigkeitsstrahls aus Kaffeeflüssigkeit und Aufspritzen des Flüssigkeitsstrahls auf einen Strahlteiler (18) mit mehreren Durchtrittsöffnungen zum zumindest teilweisen Erzeugen eines feinporigen Schaums, wobei der Strahlteiler (18) von einem Kunststoff- oder Edelstahlgewebe gebildet ist und im Wesentlichen der gesamte Flüssigkeitsstrahl auf den Strahlteiler trifft.

24. Verfahren nach Anspruch 23, **dadurch gekennzeichnet, dass** das Hindurchleiten des warmen bzw. heißen Wassers durch den mit gemahlenem Kaffee gefüllten Kaffeefilter und das Erzeugen des Flüssigkeitsstrahls bei einem Brühdruck von 1,0 bis 2,0 bar, bevorzugt 1,5 bis 1,8 bar, erfolgen.

## Claims

1. Coffee brewing device (1) with a filter holder (2), a coffee filter disposed in the filter holder (2), at least one nozzle orifice disposed downstream of the coffee filter for generating a liquid jet and a bubble former for creating a fine-pored liquid foam onto which the liquid jet is directed, **characterised in that** the bubble former comprises a jet splitter (18) with several passage orifices which is disposed transversely in the flow path of the liquid jet, which jet splitter (18) is made from a plastic or stainless steel woven fabric, and essentially the entire liquid jet hits the jet splitter (18).

2. Device as claimed in claim 1, **characterised in that** the cross-section of the jet splitter (18) open to the flow is approximately 80 to 320 mm², preferably 150 to 250 mm², in particular 175 to 225 mm².

3. Device as claimed in claim 1 or 2, **characterised in that** the bubble former has a second jet splitter (18b) which is made from a plastic or stainless steel woven fabric and is disposed at a distance from the first jet splitter (18a).

4. Device as claimed in claim 3, **characterised in that** the distance of the first jet splitter (18a) from the second jet splitter (18b) is 1 to 5 mm, preferably 2 to 4 mm, in particular approximately 3 mm.

5. Device as claimed in claim 3 or 4, **characterised in that** the bubble former has a foaming chamber (29), which is bounded by the first and second jet splitters (18a, 18b).

6. Device as claimed in claim 5, **characterised in that** the volume of the foaming chamber (29) is 400 to 800 mm³, preferably 500 to 700 mm³, in particular 550 to 650 mm³.

7. Device as claimed in one of the preceding claims, **characterised in that** the jet splitter (18) has an orifice diameter and/or a mesh width of 100 to 180 µm, preferably 130 to 150 µm.

8. Device as claimed in one of the preceding claims, **characterised in that** the plastic or stainless steel woven fabric has a yarn thickness of 80 to 140 µm, preferably 100 to 120 µm.

9. Device as claimed in one of the preceding claims,
**characterised in that** the distance between a bottom end of the nozzle orifice (6) and the first jet splitter (18a) is 10 to 35 mm, preferably 15 to 30 mm.

10. Device as claimed in one of the preceding claims, **characterised in that** the cross-section of the nozzle orifice is 0.3 to 0.7 mm², preferably 0.38 to 0.50 mm².

11. Device as claimed in one of the preceding claims, **characterised in that** the ratio between the distance of the bottom end of the nozzle orifice (6) and the first jet splitter (18a) to the diameter of the nozzle opening (6) is 15 to 40, preferably 20 to 35.

12. Device as claimed in one of claims 3 to 11, **characterised in that** the ratio between the distance of the first jet splitter (18a) and the second jet splitter to the diameter of the nozzle orifice (6) is 2.5 to 5, preferably 3.5 to 4.

13. Device as claimed in one of the preceding claims, **characterised in that** a liquid-directing device is provided, running upstream of the coffee filter and the conveying power of the liquid-directing device and the flow cross-section of the nozzle orifice (6) are adapted to one another so as to produce a brewing pressure of 1.0 to 2.0 bar, preferably 1.5 to 1.8 bar.

14. Device as claimed in one of the preceding claims, **characterised in that** a distributor cone (21) diverging in the flow direction is disposed underneath the bubble former.

15. Device as claimed in one of the preceding claims, **characterised in that** a circumferentially extending spray guard wall (25, 26) is disposed above and concentrically around the first jet splitter (18a).

16. Device as claimed in one of the preceding claims, **characterised in that** the bubble former is disposed in a detachably mounted support (17).

17. Device as claimed in claim 16, **characterised in that** the bubble former (18) and the support (17) are surrounded by an outlet cap (16) with at least one outlet orifice (28) and the outlet cap (16) and the support (17) are detachably connected to one another via a plug-in device (19, 20).

18. Device as claimed in claim 17, **characterised in that** the plug-in device (19, 20) has flow passages (23) for discharging the liquid underneath the bubble former.

19. Device as claimed in one of the preceding claims, **characterised in that** the coffee filter is a filter pad made from filter paper filled with ground coffee.

20. Method of manufacturing a bubble former for creating a fine-pored liquid foam, disposed transversely in the flow path of a liquid jet of a coffee brewing device (1), comprising the following steps:
- providing a support (17) with a passage orifice for the liquid jet,
- providing and fitting, preferably welding, a first jet splitter (18a) made from a plastic or stainless steel woven fabric on a first shoulder in the support (17) surrounding the passage orifice and extending essentially perpendicular to the liquid jet,
- providing and fitting, preferably welding, a second jet splitter (18b) made from a plastic or stainless steel woven fabric on a second shoulder in the support (17) surrounding the passage orifice and extending essentially perpendicular to the liquid jet, which second jet splitter is disposed at a distance from the first jet splitter.

21. Method of manufacturing a bubble former as claimed in claim 20, **characterised in that** an annular portion (22) surrounding the passage orifice is provided in the support (17), the top end face of which facing the liquid jet forms the first shoulder and the bottom end face of which lying in the flow direction forms the second shoulder, and the first jet splitter is fitted on the first shoulder from above and the second jet splitter is fitted on the second shoulder from underneath.

22. Coffee brewing unit with at least one nozzle orifice for generating a liquid jet and a bubble former for creating a fine-pored liquid foam onto which the liquid jet is directed, **characterised in that** the bubble former comprises a jet splitter (18) with several passage orifices disposed transversely in the flow path of the liquid jet, which jet splitter is made from a plastic or stainless steel woven fabric, and essentially the entire liquid jet hits the jet splitter.

23. Method of producing a warm coffee liquid with a fine-pored foam comprising the following steps:
- preparing warm or hot water,
- directing warm or hot water through a coffee filter filled with ground coffee,
- generating a liquid jet of coffee liquid and spraying the liquid jet onto a jet splitter (18) with several passage orifices for at least partially creating a fine-pored foam, which jet splitter (18) is made from a plastic or stainless steel woven fabric, and essentially the entire liquid jet hits the jet splitter.

24. Method as claimed in claim 23, **characterised in that** the directing of the warm or hot water through the coffee filter filled with ground coffee and the generating of the liquid jet occurs at a brewing pressure of 1.0 to 2.0 bar, preferably 1.5 to 1.8 bar.

## Revendications

1. Machine à café (1) comportant un porte-filtre (2), un filtre à café qui est disposé dans le porte-filtre (2), au moins une ouverture formant gicleur qui est disposée en aval du filtre et qui est destinée à produire un jet de liquide, et un dispositif de formation de bulles qui est destiné à produire une mousse de liquide fine et vers lequel le jet de liquide est dirigé,
**caractérisée en ce que** le dispositif de formation de bulles comprend un séparateur de jet (18), pourvu de plusieurs ouvertures de passage, qui est disposé transversalement sur la trajectoire d'écoulement du jet de liquide, le séparateur de jet (18) étant formé par un treillis en matière plastique ou en acier spécial, et quasiment tout le jet de liquide arrivant sur le séparateur de jet (18).

2. Dispositif selon la revendication 1, **caractérisé en ce que** la section transversale, ouverte pour l'écoulement, du séparateur de jet (18) est de 80 à 320 mm², de préférence de 150 à 250 mm², en particulier de 175 à 225 mm².

3. Dispositif selon la revendication 1 ou 2, **caractérisé en ce que** le dispositif de formation de bulles comprend un second séparateur de jet (18b) qui se compose d'un treillis en matière plastique ou en acier spécial et qui est disposé à une certaine distance du premier séparateur de jet (18a).

4. Dispositif selon la revendication 3, **caractérisé en ce que** la distance entre le premier séparateur de jet (18a) et le second séparateur de jet (18b) est de 1 à 5 mm, de préférence de 2 à 4 mm, en particulier d'environ 3 mm.

5. Dispositif selon la revendication 3 ou 4, **caractérisé en ce que** le dispositif de formation de mousse comprend une chambre de formation de mousse (29) qui est délimitée par le premier et le second séparateur de jet (18a, 18b).

6. Dispositif selon la revendication 5, **caractérisé en ce que** le volume de la chambre de formation de mousse (29) est de 400 à 800 mm³, de préférence de 500 à 700 mm³, en particulier de 550 à 650 mm³.

7. Dispositif selon l'une des revendications précédentes, **caractérisé en ce que** le séparateur de jet (18) présente un diamètre de trous et/ou une largeur de mailles de 100 à 180 µm, de préférence de 130 à 150 µm.

8. Dispositif selon l'une des revendications précédentes, **caractérisé en ce que** le treillis en matière plastique ou en acier spécial présente une épaisseur de fil de 80 à 140 µm, de préférence de 100 à 120 µm.

9. Dispositif selon l'une des revendications précédentes, **caractérisé en ce que** la distance entre une extrémité inférieure du gicleur (6) et le premier séparateur de jet (18a) est de 10 à 35 mm, de préférence de 15 à 30 mm.

10. Dispositif selon l'une des revendications précédentes, **caractérisé en ce que** la section transversale du gicleur est de 0,3 à 0,7 mm², de préférence de 0,38 à 0,50 mm².

11. Dispositif selon l'une des revendications précédentes, **caractérisé en ce que** le rapport entre la distance entre l'extrémité inférieure du gicleur (6) et le premier séparateur de jet (18a), et le diamètre du gicleur (6) est de 15 à 40, de préférence de 20 à 35.

12. Dispositif selon l'une des revendications 3 à 11, **caractérisé en ce que** le rapport entre la distance entre le premier séparateur de jet (18a) et le second séparateur de jet, et le diamètre du gicleur (6) est de 2,5 à 5, de préférence de 3,5 à 4.

13. Dispositif selon l'une des revendications précédentes, **caractérisé en ce qu'**il est prévu un dispositif d'amenée de liquide qui amène le liquide en amont du filtre à café, et le débit du dispositif d'amenée de liquide et la section d'écoulement du gicleur (6) sont adaptés mutuellement pour qu'il se forme une pression d'ébullition de 1,0 à 2,0 bar, de préférence de 1,5 à 1,8 bar.

14. Dispositif selon l'une des revendications précédentes, **caractérisé en ce qu'**un cône de distribution (21) qui va en s'élargissant dans le sens d'écoulement est disposé au-dessous du dispositif de formation de bulles.

15. Dispositif selon l'une des revendications précédentes, **caractérisé en ce qu'**une paroi circulaire anti-projections (25, 26) est disposée au-dessus du premier séparateur de jet (18a), concentrique par rapport à celui-ci.

16. Dispositif selon l'une des revendications précédentes, **caractérisé en ce que** le dispositif de formation de bulles est disposé dans un support amovible (17).

17. Dispositif selon la revendication 16, **caractérisé en ce que** le dispositif de formation de bulles (18) et le support (17) sont entourés par un cache de sortie (16) avec au moins une ouverture de sortie (28), et le cache (16) et le support (17) sont reliés de manière amovible grâce à un dispositif- d'emboîtement (19, 20).

18. Dispositif selon la revendication 17, **caractérisé en ce que** le dispositif d'emboîtement (19, 20) présente des conduits de passage (23) pour l'écoulement du liquide au-dessous du dispositif de formation de bulles.

19. Dispositif selon l'une des revendications précédentes, **caractérisé en ce que** le filtre à café est constitué par un sachet-filtre composé de papier filtre et rempli de café moulu.

20. Procédé pour fabriquer un dispositif de formation de bulles pour produire une mousse de liquide fine, qui est disposé transversalement sur la trajectoire d'écoulement d'un jet de liquide d'une machine à café (1), comprenant les étapes suivantes :
- mise en place d'un support (17) avec une ouverture de passage pour le jet de liquide,
- disposition et fixation, de préférence par soudage, d'un premier séparateur de jet (18a) composé d'un treillis en matière plastique ou en acier spécial sur un premier épaulement du support (17) qui entoure l'ouverture de passage et qui est globalement perpendiculaire au jet de liquide,
- dispositif et fixation, de préférence par soudage, d'un second séparateur de jet (18b) composé d'un treillis en matière plastique ou en acier fin, sur un second épaulement du support (17) qui entoure l'ouverture de passage et qui est globalement perpendiculaire au jet de liquide, le second séparateur de jet étant disposé à une certaine distance du premier.

21. Procédé pour fabriquer un dispositif de formation de bulles selon la revendication 20, **caractérisé en ce qu'**il est prévu dans le support (17) une première partie annulaire (22) qui entoure l'ouverture de passage et dont le côté frontal supérieur, tourné vers le jet de liquide, forme le premier épaulement tandis que son côté frontal inférieur, dans le sens d'écoulement, forme le second épaulement, le premier séparateur de jet étant disposé par le haut sur le premier épaulement tandis que le second séparateur de jet est disposé par le bas sur le second épaulement.

22. Unité pour machine à café, comprenant au moins une ouverture formant gicleur pour produire un jet de liquide, et un dispositif de formation de bulles qui est destiné à produire une mousse de liquide fine et vers lequel est dirigé le jet de liquide,
**caractérisée en ce que** le dispositif de formation de bulles comprend un séparateur de jet (18), pourvu de plusieurs ouvertures de passage, qui est disposé transversalement sur la trajectoire d'écoulement du jet de liquide, le séparateur de jet (18) étant formé par un treillis en matière plastique ou en acier spécial, et quasiment tout le jet de liquide arrivant sur le séparateur de jet.

23. Procédé pour fabriquer du café liquide chaud avec une mousse fine, comprenant les étapes suivantes :
- préparation d'eau chaude ou brûlante,
- passage de l'eau chaude ou brûlante à travers un filtre à café rempli de café moulu,
- production d'un jet de liquide composé de café liquide, et projection de ce jet sur un séparateur de jet (18) présentant plusieurs ouvertures de passage pour produire au moins partiellement une mousse fine, le séparateur de jet (18) étant formé par un treillis en matière plastique ou en acier spécial, et quasiment tout le jet de liquide arrivant sur le séparateur de jet (18).

24. Procédé selon la revendication 23, **caractérisé en ce que** le passage de l'eau chaude ou brûlante à travers le filtre à café rempli de café moulu et la production du jet de liquide se font à une pression d'ébullition de 1,0 à 2,0 bar, de préférence à 1,5 à 1,8 bar.
